# EUROPEAN PATENT SPECIFICATION

(11) **EP 0 934 719 B1**
(45) Date of publication and mention of the grant of the patent: **01.09.1999**
(21) Application number: 97830689.2
(22) Date of filing: 19.12.1997
(51) Int. Cl.: A47J 31/00, A47J 31/36

(54) **Apparatus and process for preparing espresso coffee**
Verfahren und Vorrichtung zum Herstellen von Espressokaffee
Dispositif et procédé pour préparer du café expresso

(43) Date of publication of application: 11.08.1999
(73) Proprietor: CIMBALI S.p.A., I-20082 Binasco (MI) (IT)
(72) Inventor: Locati, Santino, 20143 Milano (IT)
(74) Representative: Perani, Aurelio

(56) References cited:
- FR-A- 1 339 414
- FR-A- 2 130 585
- FR-A- 2 424 726
- US-A- 3 230 974

## Description

The present invention relates to an apparatus for preparing coffee, especially espresso coffee, of the type comprising a filter holder for containing a predetermined metered amount of coffee powder, a filter element placed inside the said filter holder and supporting the said predetermined amount of coffee powder, a pipe which conveys the water for preparing the coffee and opens inside the said filter holder, above the said metered amount of coffee powder, a chamber for collecting the coffee infusion, located underneath the said filter element inside the said filter holder, an aperture in the said collecting chamber from which the prepared coffee infusion is dispensed, a reservoir containing water which is heated to a predetermined temperature, a pipe for feeding cold water supplied by an external source to the apparatus and directly to the said reservoir, a pump inserted in the said cold water feed pipe, a pipe for drawing the heated water from the said reservoir, a valve member between the said pipe for drawing the heated water and the said pipe that opens above the metered amount of coffee powder for preparing the infusion and means for actuating and controlling the said pump and the said valve member.

Apparatuses of the type mentioned above are well known in the sector (see e.g. US-A-3 230 974), both for use in bars and restaurants and for domestic use.

A particular problem which arises when preparing espresso coffee using apparatuses of the type specified above concerns the way in which the water for preparing the coffee - which is usually at an optimum temperature of approximately 95° and is fed, by means of a suitable pump, at a pressure of approximately 9 bar - passes through the metered amount of coffee powder inserted above the filter element in the filter holder.

It has been observed in pratice that, if the water is passed through the metered amount of coffee powder at the high pressure of 9 bar straightaway, not all the coffee is thoroughly wetted since the water follows preferential routes through the coffee powder, with the result that not all the essential oils are extracted from the latter and the organoleptic characteristics of the beverage are irremediably impaired.

In order to avoid the disadvantage referred to above the sector has, for some time, made use of a system whereby the stage in which the beverage is prepared using water at high pressure is preceded by a preliminary stage in which the metered amount of coffee powder is just wetted with hot water which is, in this case, at low pressure.

In this way, the coffee powder that has been pressed into the filter holder to form a cake is moistened in an essentially uniform manner for a predetermined period of time and the appropriate amount of water at high pressure is then passed through it. The formation of preferential water routes through the coffee powder is thus avoided, thereby ensuring that the full flavour is extracted uniformly from all the coffee powder.

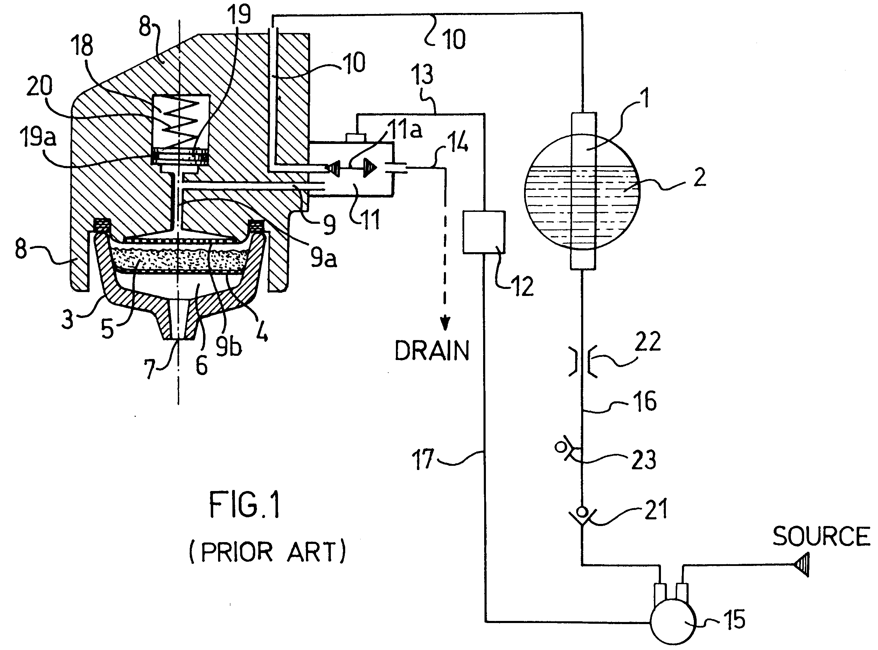

The stages of the process mentioned above are carried out using the structural layout and components of the prior art illustrated in Figure 1 of the appended drawings described below.

This figure shows, diagrammatically, the typical structure of a known apparatus for preparing espresso coffee. It comprises a reservoir 1, for example in the form of a heat exchanger immersed in a boiler 2, for heating the water to the required temperature.

The water in the boiler 2 is, for example, maintained at a temperature of approximately 120°C by means of a suitable conventional electric heater (not shown in the diagram) so that the water in the reservoir 1, when dispensed by the introduction of cold water, is at the right temperature for preparing coffee.

The known apparatus also comprises a filter holder 3 with a filtering element 4 on which the metered amount 5 of coffee powder is placed and is lightly pressed to form a cake.

The filter holder 3 has a chamber 6, located underneath the filtering element 4, in which the beverage collects, and an aperture 7 through which it is dispensed into a cup below (not shown).

This filter holder 3 can be connected and disconnected, in the normal way, to and from a corresponding support head 8 through which the water for preparing the coffee, which has been heated in the reservoir 1, arrives via a pipe 9.

After a portion 9a, the pipe 9 opens above the cake of metered coffee 5 via a series of conventional nozzles 9b.

The apparatus also comprises a water supply pipe 10 which is connected to the pipe 9 via a three-way valve 11, the latter being electrically controlled by an actuating and control unit 12 via the line 13.

Also connected to the three-way valve 11 is a pipe 14 which is in turn connected to a drain so that the pipe 9 is in communication with the outside at the end of each coffee preparation cycle.

The apparatus also comprises, in the usual way, a pump 15 which draws cold water from an external source, for example the water mains, and conveys it, through a pipe 16, to the reservoir 1 at a pressure of approximately 9 bar. The pump 15 is also activated by the control unit 12 via a line 17.

Lastly, the known apparatus comprises an expansion chamber 18 inside the pipe 9, for example located in the head 8.

The expansion chamber 18 is generally in the form of a cylindrical chamber which, in accordance with a first conventional embodiment, is connected to the external atmosphere by means of that portion of the pipe 9 that opens out above the cake of coffee powder 5 and has a given constant volume.

In accordance with another conventional embodiment, a piston 19 with a seal 19a can be fitted inside the said chamber 18, the said piston being axially movable against a calibrated spring 20.

The apparatus conventionally includes a non-return valve 21, a constriction 22 and a safety valve 23 on the pipe 16.

An example of a Known apparatus such as that described above with reference to Figure 1 is also illustrated in patent US-A-3,230,974.

When a coffee is to be prepared, the control unit 12 sends a command to the distributor 11a of the three-way valve 11 to move into the position whereby the pipe 10 is connected to the pipe 9, closing off the pipe 14, and simultaneously activates the pump 15 that feeds cold water at a pressure of 9 bar to the reservoir 1.

As a result of the pump being activated, the hot water at a pressure of 9 bar exits the reservoir 1, travels along the pipe 10 and through the three-way valve 11 into the pipe 9 via which it enters the expansion chamber 18.

At the same time, the water also enters the second portion 9a of the pipe 9, soaking into the cake 5 of coffee at a reduced pressure until the entire chamber 18 has filled with water and the pressure against the piston 19 and the calibrated spring 20, if these are present, or against the cushion of air which forms in the said chamber, has again risen to the maximum pressure of 9 bar generated by the pump 15.

In this way, in accordance with the prior art, a preliminary stage is carried out in which the coffee powder is wetted at a relatively low pressure, before the beverage is prepared at the conventional pressure of approximately 9 bar.

In practice, however, the known technology described above is plagued by a series of drawbacks that the present invention intends to eliminate.

In the first place, it has been observed that the duration of the coffee powder wetting stage depends on the volume of the expansion chamber 18 and on the time taken by the water, which is propelled by the pump 15, to get past the constriction 22 and fill the said chamber.

The duration of the wetting stage cannot therefore be changed or, for example, adapted to different coffee blends or to other operational requirements of the apparatus since it depends on the structural characteristics of the chamber 18 and of the hydraulic equipment that feeds the latter.

What is more, once the coffee has been dispensed and the position of the three-way valve 11 changed, some residual water is left in the chamber 18 and continues to flow into the filter holder 3 and through the cake 5 of used coffee, keeping it wet.

This means that, when the cake of spent coffee - which constitutes the coffee "grounds" - is removed, there is the added inconvenience of having to dispose of a wet item of waste instead of a virtually dry one which would pose less problems in terms of cleaning up.

The object of the present invention is therefore to eliminate the disadvantages encountered in connection with known apparatuses by solving the problem of how to carry out the preliminary stage in which the coffee powder is wetted with water at a low pressure and at the predetermined temperature for a period of time that can vary depending on the particular requirements of the type of coffee used, then carry out the stage in which the coffee is prepared using water at a high pressure, additionally ensuring that, once the beverage has been dispensed, the coffee grounds stay drier.

The object of the invention is achieved using an apparatus of the type specified in the preamble and a process which are characterized as specified in the claims below.

The invention will now be described in greater detail with reference to the other appended figures in which:
Figure 2 illustrates the known apparatus of Figure 1 which has been modified in accordance with the invention and in which corresponding structural elements have been indicated using the same reference numerals;
Figure 3 illustrates the invention applied to a modified embodiment of the apparatus.

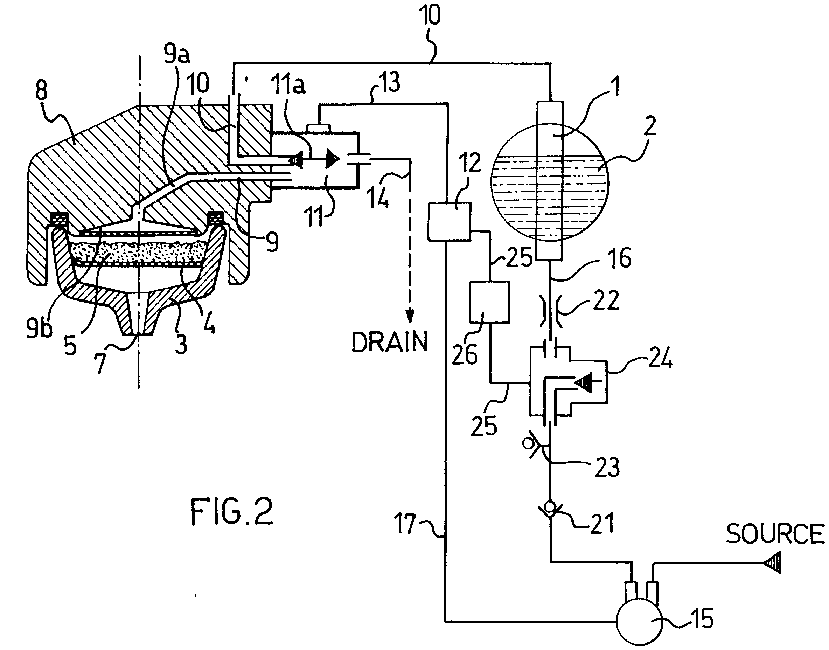

With reference to Figure 2, it should first be noted that the apparatus according to the invention has no expansion chamber on the pipe 9. The pipe 9 extends directly from the three-way valve 11 to the head 8 inside which it opens above the metered amount 5 of coffee placed in the filter holder 3.

The apparatus comprises a flow interception member - in practice a two-way (open/closed) solenoid valve - denoted by the reference 24 and inserted in the pipe 16, in that section located between the safety valve 23 and the constriction 22, downstream of the pump 15.

The two-way valve 24 is controlled by the control unit 12 via the line 25 and an adjustable timer 26.

At the start of the coffee preparation cycle, assuming that a metered amount 5 of coffee powder is already present in the filter holder 3, the start command given by the control unit 12 closes the two-way valve 24, thereby preventing water under pressure from entering the reservoir 1 and moving from there into the pipe 10.

At the same time, the same command that starts the cycle moves the three-way valve 11 into the position whereby the pipe 10 is placed in communication with the pipe 9.

Given that the latter opens above the metered amount of coffee 5, and is therefore in communication with the environment outside the filter holder 3, the water present in the reservoir 1 - which is at the boiler temperature of approximately 120° - tends, if no cold water is fed in, to turn to steam and this in turn pushes water out onto the metered amount 5 of coffee at a low pressure of approximately 1-1.5 bar, thereby wetting the metered amount of coffee.

Once a given and preset period of time has elapsed, for example between 2 and 8 seconds, the timer 26 opens the two-way valve 24 with the result that the pump 15 feeds cold water into the reservoir 1 at the preestablished high pressure, usually at approximately 9 bar.

Once the reservoir 1, which is in the form of a heat exchanger, has been filled with the appropriate amount of water used in the preliminary wetting or infusion stage, the water from the pump 15 begins the stage in which the beverage is prepared using water at a pressure of approximately 9 bar, travelling from the pipe 10 to the pipe 9 and from the latter to the metered amount of coffee in the filter holder 3.

At the end of the beverage preparation stage, the distributor 11a of the three-way valve 11 is moved into the position in which it closes the pipe 10, as illustrated in Figure 2, and opens the pipe 14 in order to discharge the water.

When the filter holder 3 is opened to dispose of the grounds, that is the spent coffee powder, they are found to be virtually dry since very little water flows from the pipe 9 which could wet them.

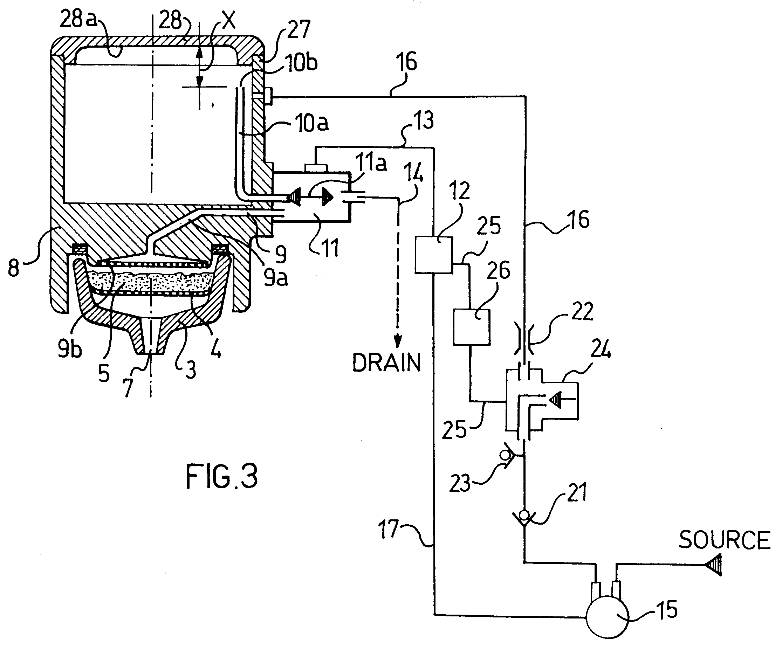

With reference to the embodiment of Figure 3 it may be observed that, in order to heat the water for preparing the coffee, the apparatus comprises a boiler 27 heated by conventional electric means (not illustrated).

The apparatus is of the type especially suited to domestic use or to automatic dispensing machines.

The water in the boiler 27 is maintained at a temperature of preferably between 90°C and 95°C, at all events at a temperature not exceeding 100°C.

The boiler 27 is closed by a lid 28 and is fed by a pipe 16 leading from the pump 15 and fitted with the same devices as those already described in the embodiment of Figure 2.

In the embodiment illustrated in Figure 3, the boiler 27 is mounted directly on the head 8 which contains the same structural and functional elements as those shown in the embodiment of Figure 2.

The reader's attention is drawn in particular to the pipe 9 connected to the three-way valve 11. The hot water feed pipe 10, which is also connected to the three-way valve 11, has a vertical portion 10a which extends into the boiler 27, inside which it terminates in the open end 10b.

The latter is positioned at a distance X from the internal wall 28a defined by the lid 28, far enough away to create a space in which a cushion of air can form inside the boiler 27, above the level of the water. During the preliminary stage in which the coffee powder is wetted - which takes place when the two-way valve 24 is closed and the three-way valve 11 is simultaneously opened, and therefore in the same way as has been described with reference to the apparatus of Figure 2 - the hot water at low pressure is driven into the pipe 9, and from there onto the metered amount of coffee powder 5, by the cushion of air present at the top of the boiler 27, above the level of the water.

This cushion of air performs the same function as that performed by the steam generated inside the heat exchanger reservoir 1 of the apparatus of Figure 2.

## Claims

1. Apparatus for preparing coffee, especially espresso coffee, comprising a filter holder (3) for containing a predetermined metered amount (5) of coffee powder, a filter element (4) placed inside the said filter holder (3) and supporting the said predetermined amount (5) of coffee powder, a pipe (9) which conveys the water for preparing the coffee and opens inside the said filter holder (3), above the said metered amount of coffee powder, a chamber (6) for collecting the coffee infusion, located underneath the said filter element (4) inside the said filter holder (3), an aperture (7) in the said collecting chamber (6) from which the prepared coffee infusion is dispensed, a reservoir (1) containing water which is heated to a predetermined temperature, a pipe (16) for feeding cold water supplied by an external source to the apparatus and directly to the said reservoir (1), a pump (15) inserted in the said cold water feed pipe (16), a pipe (10) for drawing the heated water from the said reservoir (1), a valve member (11) between the said pipe (10) for drawing the heated water and the said pipe (9) that opens above the metered amount (5) of coffee powder for preparing the infusion and means (12) for actuating and controlling the said pump (15) and the said valve member (11), characterized in that it includes a flow interception member (24) inserted in the said cold water feed pipe (16), between the said pump (15) and the said reservoir (1), and a timer device (26) which controls the interception time of the said flow interception member (24), the said interception member (24) and the said timer device (26) being actuated and controlled by the said means (12) which actuate and control the pump (15) and the said valve member (11).

2. Apparatus according to Claim 1, characterized in that the said reservoir (1) consists of a heat exchanger immersed in a boiler (2) that heats using water maintained at a temperature of approximately 120°C.

3. Apparatus according to Claim 1, characterized in that the said reservoir consists of a boiler (27) with water heated to a temperature below 100°C and the said pipe (10) for drawing the heated water includes a portion (10a) which extends vertically into the boiler (27) and terminates in an aperture (10b) positioned at a given distance (X) from the internal wall (28a) of the boiler (27), far enough away to create a space in which a cushion of air can form inside the boiler 27, above the level of the water.

4. Apparatus according to Claims 1 to 3, characterized in that the said valve member (11) is a three-way solenoid valve.

5. Apparatus according to Claims 1 to 4, characterized in that the said interception member (21) is a two-way open/closed solenoid valve.

6. Process for preparing a beverage, especially espresso coffee, from a predetermined metered amount (5) of coffee powder through which a predetermined amount of heated water is passed, the water being conveyed from a reservoir (1) fed by a forcing pump (15) at a predetermined maximum pressure, comprising a preliminary stage during which the metered amount of coffee powder (5) is wetted by an initial quantity of heated water at a pressure below the predetermined maximum pressure generated by the pump (15) for a given period of time, followed by a beverage preparation stage during which the heated water is passed through the metered amount of coffee powder (5) at the predetermined maximum pressure generated by the pump and maintained at this pressure until preparation of the beverage is complete and the latter has been dispensed, characterized in that the said preliminary stage in which the metered amount (5) of coffee powder is wetted is effected by intercepting, for a given and adjustable period of time, the cold water supply fed by the pump (15) to the said reservoir (1) and allowing the heated water to flow from the said reservoir (1) to the metered amount of coffee (5) under the same pressure and temperature conditions as those prevailing inside the reservoir (1).

7. Process according to Claim 6, characterized in that intercepting the water supplied by the pump (15) to the said reservoir (1) takes place at the same time as the start of the said stage in which the metered amount of coffee powder (5) is wetted.

8. Process according to Claims 6 and 7 characterized in that the water supply fed by the pump (15) to the said reservoir (1) is intercepted for between 2 and 8 seconds.

9. Process according to Claims 6 to 8, characterized in that the pressure of the heated water flowing from the said reservoir (1) to the said metered amount of coffee (5) during the coffee wetting stage is between 1 and 1.5 bar.

## Patentansprüche

1. Vorrichtung zur Herstellung von Kaffee, insbesondere Espresso-Kaffee, bestehend aus einem Filterhalter (3) zur Aufnahme einer bestimmten dosierten Menge Pulverkaffees, ein Filterelement (4), das im Filterhalter (3) angeordnet ist und die vorbestimmte Pulverkaffeemenge (5) trägt, einem Rohr (9), das Wasser zur Herstellung des Kaffees führt und in den Filterhalter (3) oberhalb der dosierten Pulverkaffeemenge (5) mündet, einer Kammer (6) zur Aufnahme des Kaffeeaufgusses, die sich unterhalb des Filterelements (4) im Filterhalter (3) befindet, einer Öffnung (7) in der Aufnahmekammer (6), aus der der zubereitete Kaffeeausguß abgegeben wird, einem Behälter (1), der Wasser enthält, das auf eine vorbestimmte Temperatur erhitzt ist, einem Rohr (16) für die Zufuhr von kaltem Wasser, das der Vorrichtung direkt zum Behälter (1) von einer externen Quelle zugeführt wird, einer Pumpe (15), die in das Kaltwasser-Zufuhrrohr (16) eingesetzt ist, einem Rohr (10) zum Abziehen des heißen Wassers aus dem Behälter (1), einem Ventilelement (11) zwischen dem Rohr (10) zum Abziehen des heißen Wassers und dem Rohr (9), das oberhalb der dosierten Pulverkaffeemenge für die Zubereitung der Infusion mündet, und einer Einrichtung (12) zur Betätigung und Steuerung der Pumpe (15) und des Ventilelements (11),
**gekennzeichnet durch**
ein Strömungsunterbrechungselement (24), das in das Kaltwasser-Zufuhrrohr (16) zwischen der Pumpe (15) und dem Behälter (1) eingesetzt ist, und einer Zeitsteuervorrichtung (26), die die Unterbrechungszeiten des Strömungsunterbrechungselement (24) steuert, wobei das Unterbrechungselement (24) und die Zeitsteuervorrichtung (26) von den Einrichtungen (12) betätigt und gesteuert werden, die die Pumpe (15) und das Ventilelement (11) betätigen.

2. Vorrichtung nach Anspruch 1,
**dadurch gekennzeichnet, daß**
der Behälter (1) aus einem Wärmetauscher besteht, der in einen Siedekessel (2) eingesetzt ist, der Brauchwasser erhitzt, das auf einer Temperatur von etwa 120°C gehalten wird.

3. Vorrichtung nach Anspruch 1,
**dadurch gekennzeichnet, daß**
der Behälter aus einem Siedekessel (27) mit auf eine Temperatur unter 100°C erhitztem Wasser besteht, und daß das Rohr (10) zum Abziehen des erhitzten Wassers einen Abschnitt (10a) aufweist, der sich vertikal in dem Siedekessel (27) erstreckt und in eine Öffnung (10b) mündet, die in einer bestimmten Strecke (X) von der Innenwand (28a) des Siedekessels (27) weit genug entfernt ist, um einen Raum zu schaffen, in dem sich ein Luftkissen im Siedekessel (27) oberhalb des Wasserpegels bilden kann.

4. Vorrichtung nach einem der Ansprüche 1 bis 3,
**dadurch gekennzeichnet, daß**
das Ventilelement (11) ein Dreiweg-Magnetventil ist.

5. Vorrichtung nach einem der Ansprüche 1 bis 4,
**dadurch gekennzeichnet, daß**
das Unterbrechungselement (21) ein Zweiweg-Offen/Geschlossen-Magnetventil ist.

6. Verfahren zur Herstellung eines Getränks, insbesondere von Espresso-Kaffee, aus einer vorbestimmten, dosierten Menge Pulverkaffees (5), durch die eine vorbestimmte Menge erhitzten Wassers geführt wird, das von einem Behälter (1) zugeführt wird, der von einer Druckpumpe (15) mit einem vorbestimmten Maximaldruck gespeist wird, bestehend aus einer Vorbereitungsstufe, während die dosierte Pulverkaffeemenge (5) von einer Anfangsmenge erhitzten Wassers mit einem Druck unterhalb des vorbestimmten Maximaldrucks befeuchtet wird, der von der Pumpe (15) für eine bestimmte Zeitperiode erzeugt wird, worauf eine Getränkezubereitungsphase folgt, während das erhitzte Wasser durch die dosierte Pulverkaffeemenge (5) mit dem vorbestimmten Maximaldruck geleitet wird, der von der Pumpe (15) erzeugt und aufrechterhalten wird, bis die Getränkezubereitung fertiggestellt ist und abgegeben wurde,
**dadurch gekennzeichnet, daß**
die Vorbereitungsphase, in der die dosierte Pulverkaffeemenge (5) befeuchtet ist, durch Unterbrechung während einer bestimmten und einstellbaren Zeitperiode der von der Pumpe (15) bewirkten Kaltwasserzufuhr zum Behälter (1) durchgeführt wird, so daß das erhitzte Wasser aus dem Behälter (1) zu der dosierten Kaffeemenge (5) unter den gleichen Druck- und Temperaturbedingungen wie diejenigen, die im Behälter (1) vorherrschen, fließen kann.

7. Verfahren nach Anspruch 6,
**dadurch gekennzeichnet, daß**
die Unterbrechung des von der Pumpe (15) dem Behälter (1) zugeführten Wassers gleichzeitig mit dem Beginn der Phase stattfindet, in der die dosierte Pulverkaffeemenge (5) befeuchtet wird.

8. Verfahren nach Anspruch 6 und 7,
**dadurch gekennzeichnet, daß**
die von der Pumpe (15) bewirkte Wasserzufuhr zum Behälter (1) während 2 und 8 Sekunden unterbrochen wird.

9. Verfahren nach den Ansprüchen 6 bis 8,
**dadurch gekennzeichnet, daß**
der Druck des erhitzten Wassers, das aus dem Behälter (1) zur dosierten Kaffeemenge (5) während der Kaffeebefeuchtungsphase fließt, zwischen 1 und 1,5 bar liegt.

## Revendications

1. Dispositif destiné à la préparation de café, en particulier du café expresso, comprenant un support de filtre (3) destiné à contenir une quantité dosée prédéterminée (5) de poudre de café, un élément de filtre (4) placé à l'intérieur dudit support de filtre (3) et supportant ladite quantité prédéterminée (5) de poudre de café, une conduite (9) qui achemine l'eau destinée à la préparation du café et débouche à l'intérieur dudit support de filtre (3), au-dessus de ladite quantité dosée de poudre de café, une chambre (6) destinée à recueillir l'infusion de café, située au-dessous dudit élément de filtre (4) à l'intérieur dudit support de filtre (3), un orifice (7) dans ladite chambre de recueil (6) à partir duquel l'infusion de café préparée est distribuée, un réservoir (1) contenant de l'eau qui est chauffée jusqu'à une température prédéterminée, une conduite (16) destinée à alimenter de l'eau froide fournie par une source externe vers le dispositif et directement vers ledit réservoir (1), une pompe (15) insérée dans ladite conduite d'alimentation en eau froide (16), une conduite (10) destinée à extraire l'eau chauffée depuis ledit réservoir (1), un élément de vanne (11) entre ladite conduite (10) destiné à prélever l'eau chauffée et ladite conduite (9) qui débouche au-dessus de la quantité dosée (5) de poudre de café en vue de la préparation de l'infusion, et un moyen (12) destiné à actionner et commander ladite pompe (15) et ledit élément de vanne (11), caractérisé en ce qu'il comprend un élément d'interruption de débit (24) inséré dans ladite conduite d'alimentation en eau froide (16), entre ladite pompe (15) et ledit réservoir (1), ainsi qu'un dispositif de temporisation (26) qui commande la durée d'interruption dudit élément d'interruption de débit (24), ledit élément d'interruption (24) et ledit dispositif de temporisation (26) étant actionnés et commandés par ledit moyen (12) qui actionne et commande la pompe (15) ainsi que ledit élément de vanne (11).

2. Dispositif selon la revendication 1, caractérisé en ce que ledit réservoir (1) est constitué d'un échangeur de chaleur immergé dans un bouilleur (2) qui chauffe en utilisant de l'eau maintenue à une température d'approximativement 120°C.

3. Dispositif selon la revendication 1, caractérisé en ce que ledit réservoir est constitué d'un bouilleur (27) comportant de l'eau chauffée jusqu'à une température inférieure à 100°C, et ladite conduite (10) destinée à prélever l'eau chauffée comprend une partie (10a) qui s'étend verticalement jusque dans le bouilleur (27) et se termine par un orifice (10b) positionné à une distance donnée (X) de la paroi interne (28a) du bouilleur (27), suffisamment loin pour créer un espace dans lequel un coussin d'air peut se former à l'intérieur du bouilleur 27, au-dessus du niveau de l'eau.

4. Dispositif selon les revendications 1 à 3, caractérisé en ce que ledit élément de vanne (11) est une électrovanne à trois voies.

5. Dispositif selon les revendications 1 à 4, caractérisé en ce que ledit élément d'interruption (21) est une électrovanne à deux voies ouvertes ou fermées.

6. Procédé de préparation d'une boisson, en particulier de café expresso, à partir d'une quantité dosée prédéterminée (5) de poudre de café au travers de laquelle on fait passer une quantité prédéterminée d'eau chauffée, l'eau étant acheminée à partir d'un réservoir (1) alimenté par une pompe refoulante (15) à une pression maximum prédéterminée, comprenant une étape préliminaire pendant laquelle la quantité dosée de poudre de café (5) est mouillée par une quantité initiale d'eau chauffée à une pression inférieure à la pression maximum prédéterminée engendrée par la pompe (15) pendant un intervalle de temps donné, suivi par une étape de préparation de boisson pendant laquelle l'eau chauffée est amenée à passer à travers la quantité dosée de poudre de café (5) à la pression maximum prédéterminée engendrée par la pompe et conservée à cette pression jusqu'à ce que la préparation de la boisson soit achevée et que cette dernière ait été distribuée, caractérisé en ce que ladite étape préliminaire durant laquelle la quantité dosée (5) de poudre de café est mouillée est réalisée en interrompant, pendant un intervalle de temps donné et pouvant être réglé, l'amenée d'eau froide alimentée par la pompe (15) vers ledit réservoir (1) et en permettant à l'eau chauffée de circuler depuis ledit réservoir (1) vers la quantité dosée de café (5) dans les mêmes conditions de pression et de température que celles régnant à l'intérieur du réservoir (1).

7. Procédé selon la revendication 6, caractérisé en ce que l'interruption de la fourniture d'eau audit réservoir (1) par la pompe (15) se produit au même instant que le début de ladite étape dans laquelle la quantité dosée de poudre de café (5) est mouillée.

8. Procédé selon les revendications 6 et 7, caractérisé en ce que l'amenée d'eau alimentée par la pompe (15) vers ledit réservoir (1) est interceptée pendant entre 2 et 8 secondes.

9. Procédé selon les revendications 6 à 8, caractérisé en ce que la pression de l'eau chauffée circulant depuis ledit réservoir (1) vers ladite quantité dosée de café (5) pendant l'étape de mouillage de café est comprise entre 1 et 1,5 bar.
